# EUROPÄISCHE PATENTSCHRIFT

(11) **EP 3 961 059 B1**
(45) Veröffentlichungstag und Bekanntmachung des Hinweises auf die Patenterteilung: **17.06.2026**
(21) Anmeldenummer: 21188635.3
(22) Anmeldetag: 29.07.2021
(51) Int. Cl.: F16F 1/38, F16F 1/393

(54) **LAGERBUCHSE MIT ZWISCHENROHR**
BEARING SLEEVE WITH INTERMEDIATE TUBE
DOUILLE DE PALIER POURVUE D'UN TUBE INTERMÉDIAIRE

(30) Priorität: 25.08.2020 DE 102020122187
(43) Veröffentlichungstag der Anmeldung: 02.03.2022
(73) Patentinhaber: Vibracoustic SE, 69469 Weinheim (DE)
(72) Erfinder: Fuhrmans, Ulrich, 22763 Hamburg (DE)
(74) Vertreter: Patentanwälte Olbricht Buchhold Keulertz

(56) Entgegenhaltungen:
- FR-A1- 2 695 972
- JP-B2- 4 358 874
- JP-U- H0 722 141
- RU-C2- 2 410 582
- US-B2- 8 616 773

## Beschreibung

Die Erfindung betrifft eine Lagerbuchse gemäß dem Oberbegriff von Anspruch 1.

Lagerbuchsen sind aus dem Stand der Technik bekannt und umfassen zumeist einen Innenkern, ein Außenrohr, welches umfangsseitig zu dem Innenkern angeordnet ist, sowie ein Zwischenrohr, welches zwischen Innenkern und Außenrohr angeordnet ist. Daher können derartige Lagebuchsen auch als Zwischenblechbuchsen bezeichnet werden. Zumindest ein innerer Elastomerkörper ist zwischen dem Innenkern und dem Zwischenrohr angeordnet und zumindest ein äußerer Elastomerkörper ist zwischen dem Zwischenrohr und dem Außenrohr angeordnet.

Lagerbuchsen, die in Radialrichtung steife Elastomerkörper aufweisen, welche mit großen Torsionswinkeln beaufschlagt werden können, werden häufig als Zwischenblechbuchse ausgelegt. Mit zunehmender Länge des Zwischenblechs bzw. des Zwischenrohrs in Längsrichtung der Buchse können derartige Lagerbuchsen jedoch nur geringe Kardanikwinkel ertragen. Müssen solche Lagerbuchsen jedoch zusätzlich zu großen Torsionswinkeln auch große Kardanikwinkel ertragen, so stellt dieses eine enorme konstruktive Herausforderung dar, da das Zwischenrohr durch die Kardanik verursache Auslenkung in Radialrichtung an den Innenkern und das Außenrohr anschlagen kann. Es herrscht daher ein Zielkonflikt zwischen Torsionssteifigkeit und Radialsteifigkeit, der im Stand der Technik nicht zufriedenstellend gelöst ist.

Mit hohen kardanischen Winkeln beaufschlagbare Lagerbuchsen werden auch als Elastomerkugelgelenke bezeichnet, wie beispielsweise in der US 2019/0226543 A1 offenbart. Sie zeichnen sich beispielsweise durch eine annähernd kugelförmige Ausbauchung in der Mitte des Innenkernes und einer damit korrespondierenden äußeren Anbindungsgeometrie aus, beispielsweise einer entsprechenden Einbuchtung am Außenrohr. Solche Konstruktionen enthalten im Allgemeinen keine Zwischenbleche oder Zwischenrohre. Im Gegensatz zu Zwischenblechkonstruktionen ist es bei solchen Elastomerkugelgelenken jedoch konstruktiv schwierig, eine ausreichend niedrige Torsionssteifigkeit bei gleichzeitiger hoher Radialsteifigkeit einzustellen.

Ferner sind Zwischenblechbuchsen bekannt, welche ebenfalls einen in der Mitte ausgebauchten Innenkern aufweisen, wie die DE 112007000008 T5, die GB 2577175 A oder die US 2016/0208879 A1 exemplarisch zeigen. Korrespondierend zu den Ausbauchungen weisen die Außenrohre eine entsprechende Pfanne oder Einbuchtung auf. Auch die Zwischenrohre weisen entsprechend geformte bauchige Verläufe auf. Solche konturierten Zwischenrohre werden eingesetzt, um große Kardanikwinkel sowie eine geringe Torsionsrate bei hohen radialen und axialen Steifigkeiten zu ermöglichen. Sowohl der am Zwischenrohr radial innen als auch radial außen angeordnete Elastomerkörper wird in solchen Konstruktionen in axialer Richtung ähnlich lang ausgelegt, damit beide Elastomerkörper zur kardanischen Nachgiebigkeit beitragen können. Die beiden Elastomerkörper weisen somit weitgehend identische Längen in Axialrichtung auf.

Aus der JP 4 358 874 B2 und der JP H07 22141U ist jeweils eine Lagerbuchse mit Innenkern, Außenrohr und Zwischenrohr dazwischen bekannt. Zwischen Innenkern und Zwischenrohr ist ein Elastomerkörper angeordnet. Auch zwischen Zwischenrohr und Außenrohr ist ein Elastomerkörper angeordnet. Das Zwischenrohr ist außenumfangsseitig ausgewölbt. Der Innenkern ist umfangsseitig zylindrisch im Bereich der Auswölbung ausgebildet.

Durch, dass die Länge des radial inneren Elastomerkörpers nicht wesentlich länger als die des radial äußeren Elastomerkörpers ist, wird jedoch nicht nur die torsionale Steifigkeit des radial inneren Elastomerkörpers gegenüber dem radial äußeren Elastomerkörper klein, sondern auch dessen radiale Steifigkeit, so dass der innere Elastomerkörper bei einer gleichzeitigen radialen und kardanischen Belastung punktuell einer großen Druckverformung unterliegt, die mitunter zu schädigender Faltenbildung im Elastomerkörper führen kann. Kommen nun auch noch große torsionale Auslenkungen hinzu, kommt es im Bereich der maximalen Druckverformung in dem inneren Elastomerkörper zu starken Relativbewegungen und in deren Folge zu hohem tribologischem Verschleiß, der zu vermeiden ist.

Der Erfindung liegt daher die Aufgabe zugrunde, eine Lagerbuchse zu schaffen, welcher die Probleme des Standes der Technik überwindet, insbesondere eine radialsteife Lagerbuchse vorzuschlagen, welche bei gleichzeitig auftretender radialer, kardanischer und torsionaler Auslenkung eine hohe Lebensdauer und einen niedrigen tribologischen Verschleiß aufweist.

Hauptmerkmale der Erfindung sind im kennzeichnenden Teil von Anspruch 1 angegeben. Ausgestaltungen sind Gegenstand der Ansprüche 2 bis 9.

Erfindungsgemäß wir daher eine Lagerbuchse vorgeschlagen, durch welche eine Zentrallängsachse ragt, umfassend einen Innenkern, der sich entlang der Zentrallängsachse erstreckt, ein Außenrohr, welches umfangsseitig zu dem Innenkern angeordnet ist, ein Zwischenrohr, welches zwischen Innenkern und Außenrohr angeordnet ist, zumindest einen inneren Elastomerkörper, welcher zwischen dem Innenkern und dem Zwischenrohr angeordnet ist sowie zumindest einen äußeren Elastomerkörper, welcher zwischen dem Zwischenrohr und dem Außenrohr angeordnet ist. Die Lagerbuchse ist zudem derart ausgestaltet, dass das Zwischenrohr außenumfangsseitig eine Auswölbung aufweist, deren Längsschnittverläufe beidseits der Zentrallängsachse in einer durch die Zentrallängsachse verlaufenden Längsschnittebene auf jeweils einer eigenen geschlossenen Kurvenbahn liegen, und wobei der Innenkern zumindest in seinem Bereich, der in Radialrichtung deckungsgleich mit der Auswölbung ist, eine zylindrische Außenumfangsfläche aufweist, und innerhalb jeder Längsschnittebene durch die Zentrallängsachse die Stirnseiten des inneren Elastomerkörpers, außerhalb der Kurvenbahnen angeordnet sind.

Erfindungsgemäß nimmt die Wandstärke des Zwischenrohrs in zumindest einem axialen Außenbereich in Richtung zumindest einer axialen Stirnseite der Lagerbuchse ab. Die Wandstärke verjüngt sich daher zumindest in diesem Außenbereich und bildet so Entformungsschrägen aus, die ein Entformen der Buchse aus einem Vulkanisationswerkzeug erleichtern. Denkbar ist, dass sich die Wandstärke ausgehend von der Auswölbung verjüngt. Denkbar ist, dass der Innenkern und/oder das Zwischenrohr und/oder das Außenrohr in Längsrichtung hinterschneidungsfrei ausgebildet sind. Dies ermöglicht eine einfache und beschädigungsfreie Entformung der Buchse aus einem Vulkanisationswerkzeug.

Die erfindungsgemäße Lagerbuchse löst die Probleme durch mehrere Konstruktionsaspekte. Ein Aspekt ist, dass der radial innere Elastomerkörper kardanisch steif ausgelegt ist. Das wird dadurch erreich, dass die axialen Stirnseiten des inneren Elastomerkörpers außerhalb der gedachten Kurvenbahnen liegen. Zumindest liegen in der Längsschnittebene die Stirnseiten auf einer Seite bezüglich des Zentrallängsachse außerhalb der Kurvenbahn, die die Auswölbung oder Außenauswölbung auf der gleichen Seite bezüglich der Zentrallängsachse definiert. Gleichzeitig wird durch solch eine große Längserstreckung des inneren Elastomerkörpers dessen radiale Steifigkeit stark erhöht, was die Elastomerdehnungen in der inneren Spur aufgrund der radialen Belastung zu Lasten der äußeren Spur reduziert.

Denkbar ist, dass der radial äußere Elastomerkörper kardanisch weicher ausgelegt ist als der radial innere Elastomerkörper, bzw. der radial innere Elastomerkörper kardanisch steifer ausgelegt ist als der radial äußere Elastomerkörper. Dies kann beispielsweise dadurch erreicht werden, dass die Einschnürungslänge des radial äußeren Elastomerkörpers in Längsrichtung kürzer ist als die Einschnürungslänge des radial inneren Elastomerkörpers. Die Einschnürungslänge ist der kürzeste Abstand in Längsrichtung zwischen den gegenüberliegenden Stirnseiten eines Elastomerkörpers.

Insbesondere bei kardanisch weicherer Auslegung des radial äußeren Elastomerkörpers bezüglich des radial inneren Elastomerkörpers, konzentriert sich die Kardanik auf den radial äußeren Elastomerkörper, was zu einer ausgeprägten Faltenbildung im äußeren Elastomerkörper führen kann. Um diese ausgeprägte Falte nicht tribologisch stark zu belasten, muss die Torsion nunmehr primär in den radial inneren Elastomerkörper konzentriert werden. Dieses wird dadurch erreicht, dass der Innenkern erfindungsgemäß eine zylindrische Außenumfangsfläche aufweist. Der Außendurchmesser des Innenkerns ist also in diesem Bereich an jeder Stelle entlang der Zentrallängsachse identisch.

Somit ist durch das Zusammenspiel der drei konstruktiven Aspekte (1) Ausbauchung am Zwischenrohr, (2) umfangsseitig zumindest abschnittsweise zylindrisch ausgebildeter Innenkern und (3) außerhalb der gedachten Kurvenbahnen angeordnete Stirnseiten des inneren Elastomerkörpers eine radialsteife Lagerbuchse mit einer sehr guten Funktionsentkopplung zwischen innerem und äußerem Elastomerkörper geschaffen, welche hierdurch bei gleichzeitig auftretender kardanischer, radialer und torsionaler Belastung eine hohe Lebensdauer aufweist.

Zylindrisch bedeutet durchmessergleich entlang einer Achse, vorzugsweise entlang der Zentrallängsachse. Zylindrische Bereiche sind also frei von Ein- und Auswölbungen. Deckungsgleich bedeutet, dass sich zwei Elemente oder Bereiche zweier Elemente in einer gegebenen Richtung zumindest abschnittsweise überdecken. Ein Rotationsellipsoid ist eine dreidimensionale Form, umfassend eine Sphäre als Spezialfall. Durch Abweichungen von der Kugelform oder der Sphäre kann eine Kennungsspreizung insb. der Kardanik- und Radialrichtung eingestellt werden. Eine Kurvenbahn ist ein mathematisches Konstrukt aus der Geometrie, wobei die Kurvenbahn oval, elliptisch oder kreisrund sein kann. Aus jeder Kurvenbahn lässt sich auch ein dreidimensionaler Körper um eine zentrale Längsachse drehen, wie beispielsweise ein Ovoid, ein Ellipsoid oder eine Kugel. Entsprechend ist dann die Kurvenbahn ein Oval, eine Ellipse oder eine Kreisbahn. Sind die beidseits der Zentrallängsachse ausgebildeten Längsschnittverläufe identisch, können die beiden eigenen Kurvenbahnen bei Rotation um die Zentrallängsachse einen Rotationstorus ausbilden. Ein Rotationstorus ist eine dreidimensionale Form, bei der der Mittelpunkt einer kleinen Kreisbahn entlang einer größeren Kreislinie oder der Zentrallängsachse rotiert wird. Abweichend von der strengen mathematischen Definition des Rotationstorusses wird für das Elastomerlager eine ähnliche Wirkung der Auswölbung auf die Steifigkeiten erzielt, wenn statt eines durchmesserkleinen Kreises eine kreisähnliche Form, etwa eine Ellipse, entlang einer größeren Kreislinie rotiert wird.

Denkbar ist, dass sich die Auswölbung, die auch als Außenauswölbung bezeichnet werden kann, in Radialrichtung und Längsrichtung und Umfangsrichtung erstreckt und/oder, dass die gesamte Umfangsfläche oder Oberfläche der Auswölbung auf dem Rotationsellipsoid oder Rotationstorus bzw. jeder Längsschnittverlauf auf der Kurvenbahn liegt. Denkbar ist, dass die Auswölbung längsschnittlich kreissegmentartig, ovalsegmentartig oder ellipsensegmentartig ausgebildet ist, je nach definierter Kurvenbahn. Denkbar ist, dass beide beidseits der Zentrallängsachse angeordneten Längsschnittverläufe über ihre maximale Radialerstreckung eine gemeinsame Kurvenbahn oder Kreisbahn definieren. Auf dieser gemeinsamen Kurvenbahn können dann beide Längsschnittverläufe beidseits der Zentrallängsachse in einer durch die Zentrallängsachse verlaufenden Längsschnittebene liegen oder die beiden Längsschnittverläufe berühren die gemeinsame Kurvenbahn in jeweils lediglich einem Punkt. Im ersten Fall liegen zudem die eigenen geschlossenen Kurvenbahnen identisch übereinander. Das Zentrum der gemeinsamen Kurvenbahn kann auf der Zentrallängsachse liegend und mit Abstand zu einer Quermittelebene der Lagerbuchse angeordnet sein oder aber in der Quermittelebene angeordnet sein. Denkbar ist, dass der Innenkern, das Zwischenrohr und/oder das Außenrohr koaxial angeordnet sind. Denkbar ist, dass der Innenkern, das Zwischenrohr und/oder das Außenrohr in Längsrichtung zentriert angeordnet sind. Denkbar ist, dass der Innenkern aus Metall und/oder Kunststoff gefertigt ist. Denkbar ist, dass eine Einschnürungslänge des inneren Elastomerkörpers in Längsrichtung mindestens der Ausdehnung zumindest einer eigenen oder der gemeinsamen Kurvenbahn in Längsrichtung entspricht. Die Ausdehnung einer Kurvenbahn in Längsrichtung kann deren zentrale Längserstreckung entlang der Zentrallängsachse oder deren Längserstreckung zwischen den beiden Schnittpunkten mit dem Außenumfang des Innenkrens sein. Denkbar ist, dass die beiden Elastomerkörper stoffeinheitlich oder separat ausgebildet sind. Denkbar ist, dass die zumindest eine Auswölbung stoffeinheitlich mit dem Zwischenrohr ausgebildet ist, denkbar ist ferner, dass das Zwischenrohr aus mehreren Werkstoffen als Hybrid ausgebildet ist, dass das Zwischenrohr innenumfangsseitig zumindest abschnittsweise zylindrisch ausgebildet ist und/oder zumindest in seinem Bereich, der in Radialrichtung deckungsgleich mit der inneren Einschnürungslänge ist, innenumfangsseitig zylindrisch ausgebildet ist. Denkbar ist, dass der Innenkern und/oder das Zwischenrohr und/oder das Außenrohr und/oder die gesamte Lagerbuchse spiegelsymmetrisch zu Quermittelebene ausgebildet ist. Denkbar ist, dass der Innenkern und/oder das Zwischenrohr und/oder das Außenrohr und/oder die gesamte Lagerbuchse rotationssymmetrisch zu Zentrallängsachse ausgebildet ist. Denkbar ist, dass der gesamte Längsschnittverlauf der eigenen und/oder der gemeinsamen Kurvenbahn folgt.

Weiterbildungsgemäß kann bei der Lagerbuchse nach der Erfindung eine Einschnürungslänge des äußeren Elastomerkörpers in Längsrichtung höchstens dem 0,6-fachen der Einschnürungslänge des inneren Elastomerkörpers in Längsrichtung entsprechen, vorzugsweise höchstens dem 0,5-fachen entsprechen, weiter bevorzugt höchstens dem 0,4-fachen entsprechen, wobei sich diese Beziehung vorzugsweise in einer Längsschnittebene ergibt, in der die Zentrallängsachse liegt und in der beide Einschnürungslängen liegen. Diese Beziehung kann sich auch in jeder Längsschnittebene ergeben, in der die Zentrallängsachse liegt. Durch die signifikant kleinere Einschnürlänge des äußeren Elastomerkörpers kann eine erheblich verbesserte kardanische Auslenkung ermöglicht werden.

Alternativ oder zusätzlich kann eine Einschnürungslänge des äußeren Elastomerkörpers in Längsrichtung höchstens dem 0,6-fachen der Ausdehnung einer Kurvenbahn oder der gemeinsamen Kurvenbahn in Längsrichtung entsprechen, auf der beide Längsschnittverläufe beidseits der Zentrallängsachse in einer durch die Zentrallängsachse verlaufenden Längsschnittebene liegen oder die diese Kurvenbahn tangential passieren, so dass dort jeweils ein einziger Berührungspunkt ausgebildet ist. Die Punkte der maximalen Radialerstreckung beider Längsschnittverläufe definieren die gemeinsame Kurvenbahn, sofern es eine Kreisbahn ist, da beispielsweise deren Radialabstand einen Kreisdurchmesser definiert. Vorzugsweise entspricht die Einschnürungslänge höchstens dem 0,5-fachen des Durchmessers der Kreisbahn oder dessen Ausdehnung, weiter bevorzugt höchstens dem 0,4-fachen. Durch das Verhältnis zwischen der äußeren Einschnürungslänge und der Ausdehnung der Kurvenbahn in Längsrichtung kann die Ausprägung der kardanischen Nachgiebigkeit eingestellt werden. Dies kann ebenso durch ein Verhältnis zwischen der äußeren und der inneren Einschnürungslänge erfolgen, wobei die kardanische Nachgiebigkeit des äußeren Elastomerkörpers mit Verkürzung seiner Einschnürungslänge gegenüber der inneren Einschnürungslänge und/oder der Ausdehnung der Kurvenbahn in Längsrichtung steigt. Die Einschnürungslänge des äußeren Elastomerkörpers in Längsrichtung kann geringer sein als die Längserstreckung der Auswölbung am Außenumfang des Zwischenrohrs und/oder als die Längserstreckung der Auswölbung am Innenumfang des Zwischenrohrs.

Es ist weiterbildungsgemäß möglich, dass die Einschnürungslänge des äußeren Elastomerkörpers dem 1-fachen bis 5-fachen Radialabstand zwischen Zwischenrohr und Außenrohr entspricht, vorzugsweise dem 2-fachen bis 3-fachen Radialabstand. Alternativ oder zusätzlich ist denkbar, dass die Längserstreckung des Außenrohres dem 4-fachen bis 8-fachen Radialabstand zwischen Zwischenrohr und Außenrohr entspricht, vorzugsweise dem 6-fachen.

Weiterbildungsgemäß kann bei der Lagerbuchse nach der Erfindung das Zwischenrohr innenumfangsseitig eine Auswölbung aufweisen. Diese kann auch als Innenauswölbung bezeichnet sein. Wird durch die außenzylindrische Ausführung des Innenkernes die radiale Steifigkeit des inneren Elastomerkörpers zu gering, so kann diese mit einem nicht nur nach außen, sondern auch nach innen gewölbtem Zwischenrohr kompensiert werden. Dadurch ist eine Steifigkeitsspreizung zwischen radialer und torsionaler Steifigkeit des inneren Elastomerkörpers einstellbar. Vorteilhaft ist zudem, dass diese Einstellung ohne eine signifikante Steigerung der Torsionssteifigkeit erfolgen kann. Hingegen würde eine nach radial außen ragende Auswölbung auf dem Innenkern die Torsionssteifigkeit unvorteilhaft stärker erhöhen, als eine mit gleicher Radialsteifigkeitszunahme korrespondierende Innenauswölbung. Die Innenauswölbung kann in Längsrichtung mit der Außenauswölbung zentriert sein. Die Innenauswölbung kann die Form eines zentralen Ausschnitts eines ununterbrochenen Torus aufweisen. Denkbar ist, dass in Radialrichtung beidseits des Zwischenrohres an der Stelle der größten Radialerstreckung der Auswölbungen die Elastomerkörper gleiche Dicken aufweisen. Es ist denkbar, dass eine Auswölbung weiter in den entsprechenden Elastomerkörper einragt als die andere Auswölbung oder beide Auswölbungen gleiche Einragtiefen in den entsprechenden Elastomerkörper aufweisen. Denkbar ist, dass längsschnittlich betrachtet der Radius der inneren Auswölbung größer als der Radius der äußeren Auswölbung ist und/oder beide Radien identisch sind. Der längsschnittliche Verlauf der inneren Auswölbung kann einer Kreisbahn oder einer ovalen Kurve oder gar einer Ellipse folgen, vorzugsweise über die gesamte Erstreckung der Auswölbung. Denkbar ist, dass die Auswölbung innenumfangsseitig durchgehend ausgeführt ist. Denkbar ist, dass sich in einer Längsschnittebene diametral bezüglich der Zentrallängsachse gegenüberliegende Längsschnittverläufe der Innenauswölbung unterscheiden oder identisch sind bezüglich einer oder mehrere der Aspekte: Einragtiefe in Radialrichtung, axiale Erstreckungsrichtung, Kreisbahnverlauf und Radius.

Ausgestaltungsgemäß kann bei der Lagerbuchse der innere Elastomerkörper zumindest eine längsschnittlich zumindest abschnittsweise gerade Stirnseite aufweisen. Diese kann bei radialer Einfederung zwei Falten ausbilden. Die Stirnseiten des äußeren Elastomerkörpers können längsschnittlich die Form einer Parabel aufweisen, vorzugsweise einer schiefen Parabel. Die Parabel öffnet sich in Richtung Stirnseite der Lagerbuchse. Bei einer schiefen Parabel weisen die beidseits des Scheitelpunkts angeordneten Äste unterschiedliche Steigungen auf. Während einer der beiden Äste eine hohe Steigung aufweist und daher gestreckt ist, weist der andere Ast eine niedrigere Steigung auf und ist daher gestaucht. Die schiefe Parabel kann daher nach radial innen oder radial außen geneigt sein (in Richtung des Astes mit höherer Steigung), obgleich die durch den Scheitelpunkt laufende Ordinatenachse parallel zur Zentrallängsachse verlaufen kann. Die schiefe Parabel kann sich nach radial innen neigen und so nah an der Auswölbung liegen, um eine kardanische Weichheit zu ermöglichen oder zu unterstützen. Die geraden Stirnseiten dienen der kardanischen Versteifung, während die schiefe Parabelform zu einem kardanisch weichen Elastomerkörper führt. Gerade die Kombination aus den parabelförmigen Stirnseiten und den geraden Stirnseiten an den entsprechenden Elastomerkörpern unterstreicht die Funktionstrennung und dient der Funktionsentkopplung zwischen innerem und äußerem Elastomerkörper.

Weiterbildungsgemäß kann das Zwischenrohr ein Druckguss- oder Spritzgussteil oder ein Hybrid aus einem kunststoffumspritzten Metallrohr sein. Gerade durch die Auswölbung ist dieses in einfacher Weise entformbar und kostengünstig herstellbar.

Gemäß einer weiteren Ausgestaltung kann das Innenrohr eine größere Längserstreckung aufweisen als das Zwischenrohr. Alternativ oder zusätzlich kann das Zwischenrohr eine größere Längserstreckung aufweisen als das Außenrohr. Insbesondere letztere Ausgestaltung dient einer großen kardanischen Auslenkungsmöglichkeit mit entsprechend großen Kardanikwinkeln des Außenrohrs gegenüber dem Zwischenrohr und/oder dem Innenkern.

Weiterbildungsgemäß kann vorgesehen sein, dass der Abstand in Radialrichtung zwischen dem Innenkern und dem Zwischenrohr geringer ist als der Abstand in Radialrichtung zwischen dem Zwischenrohr und dem Außenrohr. Diese Ausgestaltung dient einer kardanischen Auslenkung mit großen Kardanikwinkeln des Außenrohrs gegenüber dem Zwischenrohr, sowie einer hohen Radialsteifigkeit des inneren Elastomerkörpers.

Weiterbildungsgemäß können innerhalb einer durch die Zentrallängsachse verlaufenden Längsschnittebene beide diametral bezüglich der Zentrallängsachse gegenüberliegenden eigenen Kurvenverläufe identisch oder unterschiedlich sein. Es ist auch denkbar, dass zwar innerhalb einer ersten Längsschnittebene beide eigenen Kurvenverläufe identisch sind und in zumindest einer weiteren um einen definierten Winkel bezüglich der Zentrallängsachse dazu versetzten Längsschnittebene beide eigenen Kurvenverläufe ebenfalls identisch sind, sich jedoch die Kurvenverläufe der ersten Längsschnittebene von den Kurvenverläufen der zumindest einen weiteren Längsschnittebene unterscheiden. Der definierte Winkel kann 90° oder betragen.

Vorteilhaft ist eine geringe radiale Dicke des äußeren Elastomerkörpers am oder im Bereich der Auswölbung, um eine möglichst geringe Kardaniksteifigkeit zu erreichen. Erfindungsgemäß wird daher zudem eine Lagerbuchse vorgeschlagen, durch welche eine Zentrallängsachse ragt, umfassend einen Innenkern, der sich entlang der Zentrallängsachse erstreckt, ein Außenrohr, welches umfangsseitig zu dem Innenkern angeordnet ist, ein Zwischenrohr, welches zwischen Innenkern und Außenrohr angeordnet ist, zumindest einen inneren Elastomerkörper, welcher zwischen dem Innenkern und dem Zwischenrohr angeordnet ist sowie zumindest einen äußeren Elastomerkörper, welcher zwischen dem Zwischenrohr und dem Außenrohr angeordnet ist. Die Lagerbuchse ist zudem derart ausgestaltet, dass das Zwischenrohr außenumfangsseitig eine Auswölbung aufweist, deren Längsschnittverläufe beidseits der Zentrallängsachse in einer durch die Zentrallängsachse verlaufenden Längsschnittebene auf jeweils einer eigenen geschlossenen Kurvenbahn liegen, und wobei der Innenkern zumindest in seinem Bereich, der in Radialrichtung deckungsgleich mit der Auswölbung ist, eine zylindrische Außenumfangsfläche aufweist, und innerhalb jeder Längsschnittebene durch die Zentrallängsachse die Stirnseiten des inneren Elastomerkörpers, außerhalb der Kurvenbahnen angeordnet sind. Die Lagerbuchse zeichnet sich dadurch aus, dass ein Einschnürungspunkt in einer Längsschnittebene, in der die Zentrallängsachse liegt, auf einer Stirnseite des äußeren Elastomerkörpers liegt, und der Einschnürungspunkt zudem innerhalb eines Außenkreises oder äußeren Elastomerhöhenkreises mit einem Zentrum liegt, dessen Durchmesser dem Innendurchmesser des Außenrohrs in einer das Zentrum umfassenden Quermittelebene der Lagerbuchse entspricht oder innerhalb eines Mittelkreises oder halben äußeren Elastomerhöhenkreises mit einem Zentrum liegt, dessen Durchmesser dem Mitteldurchmesser des äußeren Elastomerkörpers in einer das Zentrum umfassenden Quermittelebene der Lagerbuchse entspricht. Das Zentrum kann das Zentrum einer Kurvenbahn sein.

Denkbar ist alternativ oder zusätzlich, dass der kürzeste Abstand zwischen einer stirnseitigen Parabel und der gemeinsamen Kurvenbahn maximal der 1-fachen Radialdicke des äußeren Elastomerkörpers entspricht, vorzugsweise maximal der 0,5-fachen Radialdicke entspricht. Der kürzeste Abstand kann auf einer Geraden liegen, die sowohl das Zentrum als auch den Einschnürungspunkt schneidet. Die Radialdicke kann die Radialdicke in der das Zentrum umfassenden Quermittelebene der Lagerbuchse sein.

Dadurch, dass die Stirnseite oder die Parabel oder schiefe Parabel des äußeren Elastomerkörpers am oder im Bereich der Auswölbung liegt, kann dadurch eine Kardanische Weichheit ermöglicht oder gefördert werden. Dadurch treten zudem nur geringe Druckspannungen im äußeren Elastomerkörper auf. Der äußere Elastomerkörper kann somit in vorteilhafter Weise hauptsächlich auf Scherung beansprucht werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a: eine Längsschnittansicht durch eine erfindungsgemäße Lagerbuchse gemäß einer ersten Ausführungsform,
- Fig. 1b: eine Längsschnittansicht gemäß Fig. 1a mit eingezeichneten Kurvenbahnen;
- Fig. 2: eine Längsschnittansicht durch eine erfindungsgemäße Lagerbuchse gemäß einer zweiten Ausführungsform und
- Fig. 3: eine Längsschnittansicht durch eine erfindungsgemäße Lagerbuchse gemäß einer dritten Ausführungsform.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechende Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

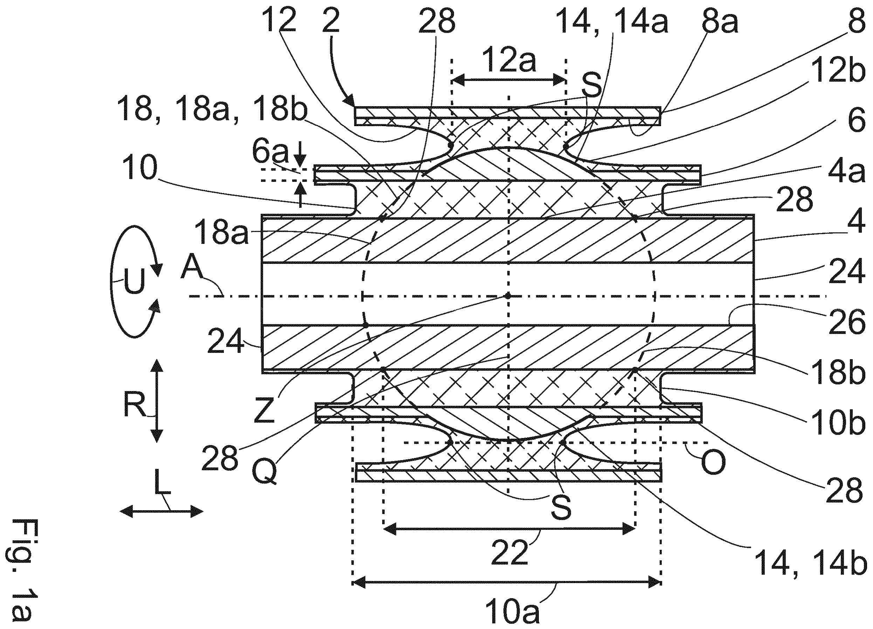

Fig. 1a zeigt die Ansicht einer Längsschnittebene durch eine Lagerbuchse 2, die zur Lagerung eines nicht dargestellten Fahrzeugteils dient. Durch die Lagerbuchse 2 ragt eine Zentrallängsachse A und entlang dieser eine durchgehende Montageausnehmung 26. Beidends weist die Lagerbuchse 2 jeweils eine Stirnseite 24 auf. Die gezeigte Lagerbuchse 2 ist rotationssymmetrisch um die Zentrallängsachse A ausgebildet und umfasst einen Innenkern 4, ein Zwischenrohr 6 und ein Außenrohr 8, welche sich entlang der Längsachse A erstrecken und koaxial angeordnet sind. Das Zwischenrohr 6 ist im radialen Zwischenbereich von Innenkern 4 und Außenrohr 8 angeordnet. Der Innenkern 4 ist in Längsrichtung L länger als das Zwischenrohr 6, welches wiederum länger als das Außenrohr 8 ist. Der Radialabstand zwischen Innenkern 4 und Zwischenrohr 6 ist geringer als der Radialabstand zwischen Zwischenrohr 6 und Außenrohr 8. Das dient großen Auslenkungen des Außenrohres 8, beispielsweise kardanische Auslenkungen sowie der Erhöhung der radialen Steifigkeit des inneren Elastomerkörpers 10 gegenüber des äußeren Elastomerkörpers 12. Der Innenkern 4, das Zwischenrohr 6 und das Außenrohr 8 sind in Längsrichtung L zentriert angeordnet und zudem jeweils spiegelsymmetrisch zu einer Quermittelebene Q ausgebildet. Ein innerer Elastomerkörper 10 ist zwischen dem Innenkern 4 und dem Zwischenrohr 6 angeordnet und ein äußerer Elastomerkörper 12 ist zwischen dem Zwischenrohr 6 und dem Außenrohr 8 angeordnet.

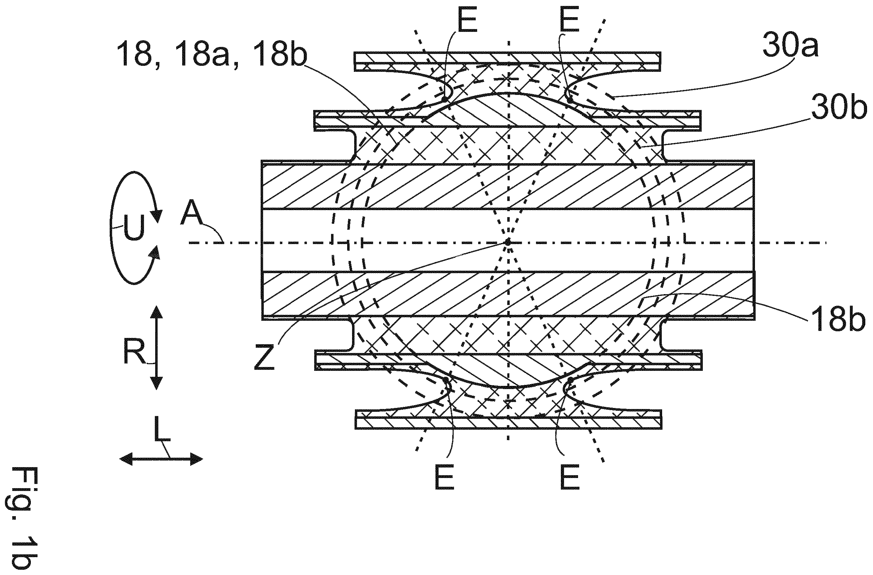

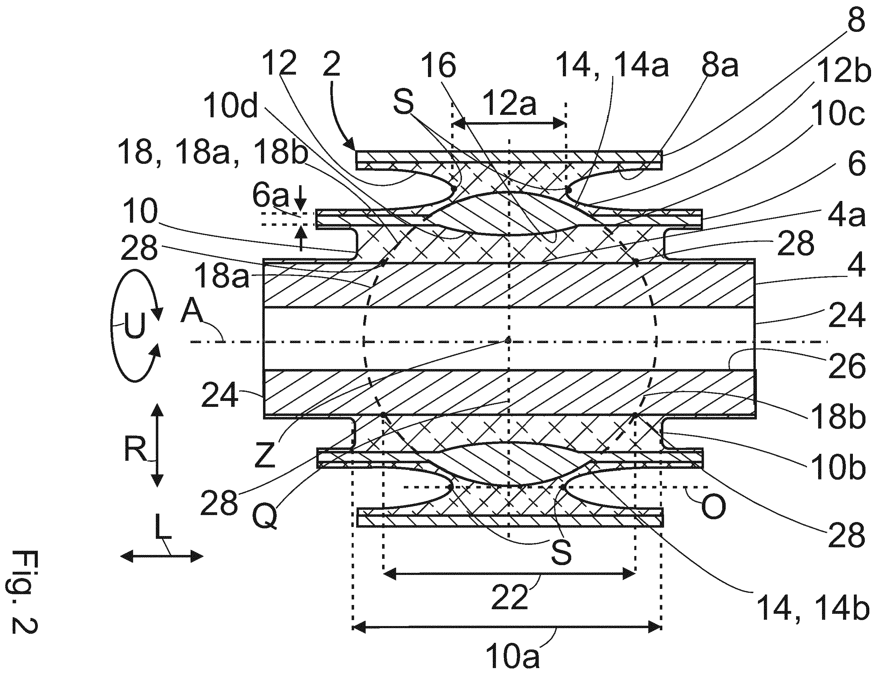

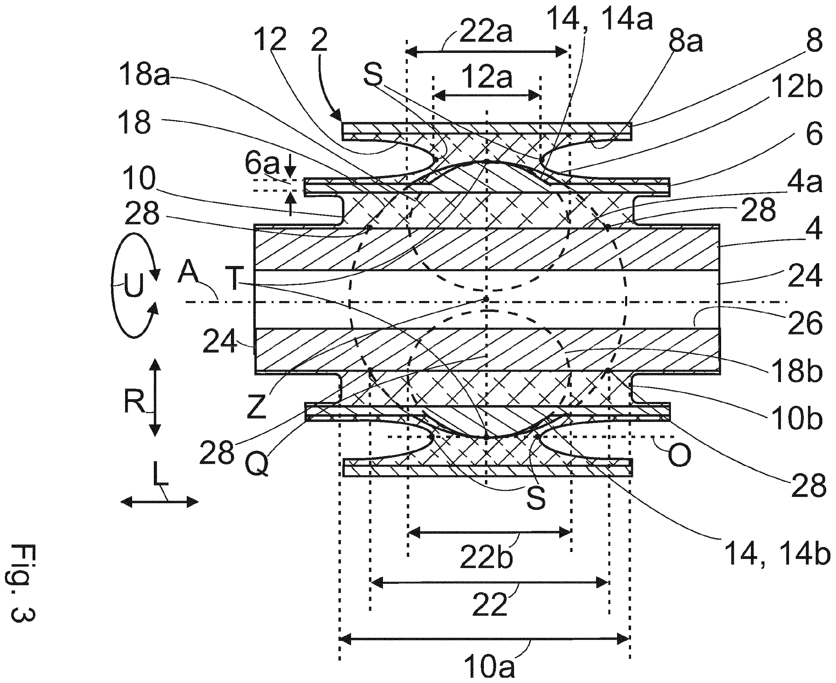

In der Lagerbuchse 2 ist eine gestrichelte Kurvenbahn 18 angetragen, die mit der Ausgestaltung des Zwischenrohrs 6 korrespondiert. Die Kurvenbahn 18 schneiden den Innenkern 4 an den Schnittpunkten 28. Zwischen zwei Schnittpunkten 28 auf einer Seite bezüglich der Zentrallängsachse A liegt die Ausdehnung der Kurvenbahn 18 in Längsrichtung an. Das Zwischenrohr 6 umfasst nämlich außenumfangsseitig eine zentrierte Auswölbung 14 oder Außenauswölbung, deren Umfangsfläche auf einer durch die kreisförmige Kurvenbahn 18 definierten Sphäre liegt. Das Zentrum Z der Kurvenbahn 18 liegt auf der Zentrallängsachse A und in der Quermittelebene Q. Die Auswölbung 14 erstreckt sich in Umfangsrichtung U entlang des gesamten Außenumfangs des Zwischenrohrs 6, wobei deren gesamte Umfangsfläche oder Oberfläche auf einem Rotationsellipsoid liegt. Im gezeigten Längsschnittverlauf sind die beiden beidseits der Zentrallängsachse A angeotangentialrdneten Längsschnittverläufe 14a, 14b der Auswölbung 14 gezeigt. Deren maximale Erstreckung in Radialrichtung R definiert den Durchmesser der Kurvenbahn 18, deren Mittelpunkt auf der Zentrallängsachse A liegt, weshalb diese auch als gemeinsame Kurvenbahn 18 bezeichnet werden kann. Wie später noch mit Bezug auf Fig. 3 näher erläutert, definiert auch jeder Längsschnittverlauf 14a, 14b eine eigene Kurvenbahn 18a, 18b, wobei in den Fig. 1a, 1b und 2 der Fall gezeigt ist, dass alle Kurvenbahnen 18, 18a und 18b identisch und zueinander zentriert sind. Die Kurvenbahnen 18, 18a und 18b sind in der Fig. 1a, 1b und 2 als Kreisbahnen abgebildet.

Der Innenkern 4 ist sowohl innen- als auch außenumfangsseitig zylindrisch ausgebildet, so dass seine Außenumfangsfläche 4a in dem Bereich, der in Radialrichtung R deckungsgleich mit der Auswölbung 14 ist, keine Auswölbung aufweist.

Das Zwischenrohr 6 ist als Druckguss- oder Spritzgussteil und innenumfangsseitig zylindrisch, also mit gleichem Durchmesser entlang der Zentrallängsachse A, ausgebildet. Außenumfangsseitig ist es ebenfalls in seinen beiden Abschnitten beidseits der Auswölbung 14 bzw. seinen axialen Außenbereichen zylindrisch ausgebildet. Die Wandstärke 6a des Zwischenrohrs 6 kann jedoch in diesen beiden Außenbereichen in Richtung der Stirnseite 24 auch abnehmen.

Das Außenrohr 8 ist zylindrisch ausgebildet und weist daher eine zylindrische Außen- und eine zylindrische Innenumfangsfläche 8a auf.

Die beiden Elastomerkörper 10, 12 sind als geometrisch getrennte Körper und jeweils in Längsrichtung L und Umfangsrichtung U unterbrechungsfrei ausgebildet, wobei sie hier nicht dargestellt aus fertigungsgründen in der Praxis an den Stirnseiten der Zwischenbleche meist verbunden sind, so dass sie in der Praxis eine material- und stoffeinheitliche Einheit bilden. Jeder der beiden Elastomerkörper 10, 12 weist Stirnseiten 10b, 12b auf, wobei die Stirnseiten 10b längsschnittlich gerade ausgebildet sind und orthogonal zur Zentrallängsachse A verläuft und die Stirnseiten 12b längsschnittlich parabelförmig ausgebildet sind. Die parabelförmigen Stirnseiten 12b folgen längsschnittlich einer schiefen Parabel, die sich an die beiden radialbegrenzenden Rohre 6 und 8 anlegt. Die schiefe Parabelform ist und deren Ordinatenachse O sind zur Zentrallängsachse A parallel erstreckend ausgebildet. Der in Radialrichtung R innere Ast der Parabel ist gestreckter als der in Radialrichtung R äußere Ast. Daher ist die Parabel nach radial innen geneigt.

Jeder der beiden Elastomerkörper 10, 12 weist eine Einschnürung mit einer Einschnürungslänge 10a und 12a in Längsrichtung L zwischen den jeweiligen Stirnseiten 10b, 12b auf. Die Einschnürlänge 12a ist der axialabstand in Längsrichtung L zwischen Scheitelpunkten S von schiefen parabelförmigen Stirnseiten 12b des äußeren Elastomerkörpers 12.

Die Einschnürungslänge 10a des inneren Elastomerkörpers 10 entspricht mindestens der Ausdehnung 22 der Kurvenbahn 18 in Längsrichtung L - im gezeigten Spezialfall also dem Abstand zwischen den Schnittpunkten 28 zwischen der Kurvenbahn 18, 18a, 18b mit dem zylindrischen Abschnitt des Innenkerns 4. Daher sind die Stirnseiten 10b auch außerhalb der Kurvenbahn 18 angeordnet. Die äußere Einschnürungslänge 12a des äußeren Elastomerkörpers 12 ist signifikant kleiner als die innere Einschnürungslänge 10a und entspricht der 0,4-fachen Einschnürungslänge 10a. Beide Einschnürungen sind bezüglich der Quermittelebene Q zentriert. Die Einschnürungslänge 12a in Längsrichtung L ist kleiner als die Längserstreckung der Auswölbung 14.

Fig. 1b basiert auf Fig. 1a, jedoch sind aus Gründen der Übersichtlichkeit diverse Bezugszeichen ausgeblendet und nachfolgend erläuterte Bezugszeichen und Bezugsgeometrien eingeblendet, welche jedoch auch in den übrigen Fig. 1a, 2 und 3 analog angetragen werden können. Um das Zentrum Z herum spannen sich nun nicht nur die gemeinsame Kurvenbahn 18 sowie die eigenen Kurvenbahnen 18a und 18b auf, sondern auch ein Außenkreis 30a und ein Mittelkreis 30b. Der Außenkreis 30a ist derart ausgestaltet, dass er die Innenumfangsfläche 8a tangiert. Der Durchmesser des Außenkreises 30a entspricht also dem Innendurchmesser des Außenrohres 8 im Bereich der Quermittelebene Q, so dass sein Mittelpunt im Mittelpunkt Z der Kurvenbahn 18 liegt. Mittig zwischen dem Außenkreis 30a und der gemeinsamen Kurvenbahn 18 liegt der Mittelkreis 30b. Der Durchmesser des Mittelkreises 30b entspricht also dem Mittendurchmesser des äußeren Elastomerkörpers 12 im Bereich der Quermittelebene Q.

Zu erkennen ist, dass zumindest der Außenkreis 30a die Stirnseiten 12b bzw. Parabeln schneidet, vorzugsweise schneidet zudem der Mittelkreis 30b die Stirnseiten 12b bzw. Parabeln. Vier Einschnürungspunkte E sind zu erkennen, wobei jeder Parabel ein Einschnürungspunkt E angetragen ist. Der Einschnürungspunkt E liegt auf einer Stirnseite 12b des äußeren Elastomerkörpers 12 und innerhalb des Außenkreises 30a und innerhalb des Mittelkreises 30b.

Auf einer Geraden liegen das Zentrum Z und ein Einschnürungspunkt E. Der Einschnürungspunkt E ist derart angeordnet, dass er den kürzesten direkten Abstand zur Kurvenbahn 18 oder 18a bzw. 18b aufweist. Der kürzeste Abstand zwischen einer stirnseitigen Parabel und der gemeinsamen Kurvenbahn 18 entspricht maximal der 1-fachen Radialdicke des äußeren Elastomerkörpers 12, vorzugsweise maximal der 0,5-fachen Radialdicke. Dieser kürzeste Abstand liegt auf einer Geraden, die sowohl das Zentrum Z als auch den Einschnürungspunkt E schneidet. Als Radialdicke soll im gezeigten Beispiel die Radialdicke in der das Zentrum Z umfassenden Quermittelebene Q der Lagerbuchse aufgefasst sein.

Im Folgenden soll bezüglich Fig. 2 lediglich auf die wesentlichen Unterschiede zur Ausführung gemäß Fig. 1a und 1b eingegangen werden. In Fig. 2 ist eine Ansicht einer Längsschnittebene durch eine Lagerbuchse 2 in einer zweiten Ausführung gezeigt.

Am Zwischenrohr 6 ist innenumfangsseitig und ebenfalls bezüglich der Quermittelebene Q eine Auswölbung 16 oder Innenauswölbung vorgesehen. Die Auswölbung 16 ist in Längsrichtung L mit der Auswölbung 14 zentriert, jedoch weist sie eine geringere Längserstreckung und einen größeren Radius auf. Die Auswölbung 16 reduziert die Radialdicke des inneren Elastomerkörpers 10. Im vorliegenden Beispiel sind die Radialdicken der Elastomerkörper 10 und 12 beidseits des Zwischenrohres 6 an der Stelle der größten Radialerstreckung der Auswölbungen 14 und 16 identisch. In der Quermittelebene Q weisen die Elastomerkörper 10 und 12 daher gleiche Radialdicken auf. Zu beiden Seiten der Auswölbung 16 weist das Zwischenrohr 6 einen innenseitigen zylindrischen Verlauf auf. Die Auswölbung 16 führt zu einer Einwölbung 10d im Außenumfang 10c des inneren Elastomerkörpers 10, jedoch ist die Einragtiefe der Auswölbung 16 in Radialrichtung R geringer als die Einragtiefe der Auswölbung 14.

Im Folgenden soll bezüglich Fig. 3 lediglich auf die wesentlichen Unterschiede zur Ausführung gemäß Fig. 1a und 1b eingegangen werden. In Fig. 3 ist eine Längsschnittansicht einer Lagerbuchse 2 in einer dritten Ausführung abgebildet.

Im Gegensatz zu den ersten beiden gezeigten Ausführungen sind nun die Kurvenbahnen 18, 18a und 18b nicht mehr identisch und miteinander zentriert. Erkennbar ist, dass die Auswölbung 14 bzw. deren Längsschnittverläufe 14 und 14b zwar eine bezüglich der Fig. 1a, 1b und 2 gleichbleibende Erstreckung in Radialrichtung R in den äußeren Elastomerkörper 12 hinein ausweisen, jedoch über einen kürzeren Durchmesser definiert sind. Die Längsschnittverläufe 14a und 14b definiert also über ihren Verlauf die entsprechenden Kurvenbahnen 18a und 18b. Auch die gemeinsamen Kurvenbahn 18 ist durch die Längsschnittverläufe 14a und 14b definiert und zwar über den Tangentialpunkt T, der sich an dem Punkt der maximalen Radialerstreckung zwischen Längsschnittverlauf 14a, 14b und gemeinsamer Kurvenbahn 18 ausbildet. Die Kurvenbahnen 18a und 18b sind elliptisch ausgebildet.

Die Ausdehnungen 22a, 22b der eigenen Kurvenbahnen 18a, 18b sind geringer als die Ausdehnung 22 der gemeinsamen Kurvenbahn 18, jedoch größer als die Einschnürungslänge 12a. Das Zentrum der Kurvenbahn 18a liegt auf der Kurvenbahn 18b und umgekehrt.

### Bezugszeichenliste

| | | | |
|---|---|---|---|
| 2 | Lagerbuchse | A | Zentrallängsachse |
| 4 | Innenkern | E | Einschnürungspunkt |
| 4a | Außenumfangsfläche | L | Längsrichtung |
| 6 | Zwischenrohr | O | Ordinatenachse |
| 6a | Wandstärke | Q | Quermittelebene |
| 8 | Außenrohr | R | Radialrichtung |
| 8a | Innenumfangsfläche | S | Scheitelpunkt |
| 10 | Elastomerkörper | T | Tangentialpunkt |
| 10a | Einschnürungslänge | U | Umfangsrichtung |
| 10b | Stirnseite | Z | Zentrum |
| 10c | Außenumfang | | |
| 10d | Einwölbung | | |
| 12 | Elastomerkörper | | |
| 12a | Einschnürungslänge | | |
| 12b | Stirnseite | | |
| 14 | Auswölbung | | |
| 14a | Längsschnittverlauf | | |
| 14b | Längsschnittverlauf | | |
| 16 | Auswölbung | | |
| 18 | gemeinsame Kurvenbahn | | |
| 18a | eigene Kurvenbahn | | |
| 18b | eigene Kurvenbahn | | |
| 22 | Ausdehnung | | |
| 22a | Ausdehnung | | |
| 22b | Ausdehnung | | |
| 24 | Stirnseite | | |
| 26 | Montageausnehmung | | |
| 28 | Schnittpunkt | | |
| 30a | Außenkreis | | |
| 30b | Mittelkreis | | |

## Patentansprüche

1. Lagerbuchse (2), durch welche eine Zentrallängsachse (A) ragt, umfassend
einen Innenkern (4), der sich entlang der Zentrallängsachse (A) erstreckt,
ein Außenrohr (8), welches umfangsseitig zu dem Innenkern (4) angeordnet ist,
ein Zwischenrohr (6), welches zwischen Innenkern (4) und Außenrohr (6) angeordnet ist, zumindest einen inneren Elastomerkörper (10), welcher zwischen dem Innenkern (4) und dem Zwischenrohr (6) angeordnet ist sowie
zumindest einen äußeren Elastomerkörper (12), welcher zwischen dem Zwischenrohr (6) und dem Außenrohr (8) angeordnet ist, wobei das Zwischenrohr (6) außenumfangsseitig eine Auswölbung (14) aufweist, deren Längsschnittverläufe (14a, 14b) beidseits der Zentrallängsachse (A) in einer durch die Zentrallängsachse (A) verlaufenden Längsschnittebene auf jeweils einer eigenen geschlossenen Kurvenbahn (18a, 18b) liegen, und wobei der Innenkern (4) zumindest in seinem Bereich, der in Radialrichtung (R) deckungsgleich mit der Auswölbung (14) ist, eine zylindrische Außenumfangsfläche (4a) aufweist, und innerhalb jeder Längsschnittebene durch die Zentrallängsachse (A) die Stirnseiten (10b) des inneren Elastomerkörpers (10), außerhalb der Kurvenbahnen (18a, 18b) angeordnet sind, **dadurch gekennzeichnet, dass** die Wandstärke (6a) des Zwischenrohrs (6) in zumindest einem axialen Außenbereich in Richtung zumindest einer axialen Stirnseite (24) der Lagerbuchse (2) abnimmt.

2. Lagerbuchse (2) nach einem der vorangehenden Ansprüche, **dadurch gekennzeichnet, dass** eine Einschnürungslänge (12a) des äußeren Elastomerkörpers (12) in Längsrichtung (L) höchstens dem 0,6-fachen der Einschnürungslänge (10a) des inneren Elastomerkörpers (10) in Längsrichtung (L) entspricht, vorzugsweise höchstens dem 0,5-fachen entspricht, weiter bevorzugt höchstens dem 0,4-fachen entspricht, wobei sich diese Beziehung vorzugsweise in einer Längsschnittebene ergibt, in der die Zentrallängsachse (A) liegt und in der beide Einschnürungslängen (10a, 12a) liegen.

3. Lagerbuchse (2) nach einem der vorangehenden Ansprüche, **dadurch gekennzeichnet, dass** das Zwischenrohr (6) innenumfangsseitig eine Auswölbung (16) aufweist.

4. Lagerbuchse (2) nach einem der vorangehenden Ansprüche, **dadurch gekennzeichnet, dass** der innere Elastomerkörper (10) eine längsschnittlich zumindest abschnittsweise gerade Stirnseite (10b) aufweist und/oder der äußere Elastomerkörper (12) eine längsschnittlich parabelförmige Stirnseite (12b) aufweist, wobei sich die Parabel in Richtung Stirnseite (24) der Lagerbuchse (2) öffnet.

5. Lagerbuchse (2) nach einem der vorangehenden Ansprüche, **dadurch gekennzeichnet, dass** das Zwischenrohr (6) ein Druckguss- oder Spritzgussteil oder ein Hybrid aus einem kunststoffumspritzten Metallrohr ist.

6. Lagerbuchse (2) nach einem der vorangehenden Ansprüche, **dadurch gekennzeichnet, dass** das Innenrohr (4) eine größere Längserstreckung aufweist als das Zwischenrohr (6) und/oder das Zwischenrohr (6) eine größere Längserstreckung aufweist als das Außenrohr (8).

7. Lagerbuchse (2) nach einem der vorangehenden Ansprüche, **dadurch gekennzeichnet, dass** der Abstand in Radialrichtung (R) zwischen dem Innenkern (4) und dem Zwischenrohr (6) geringer ist als der Abstand in Radialrichtung (R) zwischen dem Zwischenrohr (6) und dem Außenrohr (8).

8. Lagerbuchse (2) nach einem der vorangehenden Ansprüche, **dadurch gekennzeichnet, dass** innerhalb einer durch die Zentrallängsachse (A) verlaufenden Längsschnittebene beide diametral bezüglich der Zentrallängsachse gegenüberliegenden eigenen Kurvenverläufe (18a, 18b) identisch oder unterschiedlich sind.

9. Lagerbuchse (2) nach einem der vorangehenden Ansprüche, **dadurch gekennzeichnet, dass** ein Einschnürungspunkt (E) in einer Längsschnittebene, in der die Zentrallängsachse (A) liegt, auf einer Stirnseite (12b) des äußeren Elastomerkörpers (12) liegt, und der Einschnürungspunkt (E) innerhalb eines Außenkreises (30a) mit Zentrum (Z) liegt, dessen Durchmesser dem Innendurchmesser des Außenrohrs (8) in einer Quermittelebene (Q) der Lagerbuchse (2) entspricht und/oder innerhalb eines Mittelkreises (30b) mit Zentrum (Z) liegt, dessen Durchmesser dem Mitteldurchmesser des äußeren Elastomerkörpers (12) in einer Quermittelebene (Q) der Lagerbuchse (2) entspricht.

## Claims

1. Bearing sleeve (2) through which a central longitudinal axis (A) extends, comprising an inner core (4) extending along the central longitudinal axis (A), an outer tube (8) arranged circumferentially relative to the inner core (4), and an intermediate tube (6), which is arranged between the inner core (4) and the outer tube (6), at least one inner elastomeric body (10) which is arranged between the inner core (4) and the intermediate tube (6), and at least one outer elastomeric body (12) arranged between the intermediate tube (6) and the outer tube (8), wherein the intermediate tube (6) has a bulge (14) on its outer circumference, the longitudinal sections (14a, 14b) of which lie on either side of the central longitudinal axis (A) in a longitudinal section plane passing through the central longitudinal axis (A), each on its own closed curved path (18a, 18b), and wherein the inner core (4) has a cylindrical outer circumferential surface (4a) at least in its region which, in the radial direction (R), coincides with the bulge (14), and within each longitudinal section plane through the central longitudinal axis (A), the end faces (10b) of the inner elastomeric body (10) are arranged outside the curved paths (18a, 18b), **characterised in that** the wall thickness (6a) of the intermediate tube (6) decreases in at least one outer axial region in the direction of at least one axial end face (24) of the bearing sleeve (2).

2. Bearing sleeve (2) according to one of the preceding claims, **characterised in that** a constriction length (12a) of the outer elastomeric body (12) in the longitudinal direction (L) corresponds to at most 0.6 times the constriction length (10a) of the inner elastomeric body (10) in the longitudinal direction (L), preferably corresponds to no more than 0.5 times, and more preferably corresponds to no more than 0.4 times, wherein this relationship preferably arises in a longitudinal section plane in which the central longitudinal axis (A) lies and in which both constriction lengths (10a, 12a) lie.

3. Bearing sleeve (2) according to one of the preceding claims, **characterised in that** the intermediate tube (6) has a bulge (16) on its inner circumferential side.

4. Bearing sleeve (2) according to one of the preceding claims, **characterised in that** the inner elastomeric body (10) has an end face (10b) which is at least partially straight in the longitudinal section and/or the outer elastomeric body (12) has an end face (12b) that is parabolic in longitudinal section, wherein the parabola opens towards the end face (24) of the bearing sleeveing (2).

5. Bearing sleeve (2) according to one of the preceding claims, **characterised in that** the intermediate tube (6) is a die-cast or injection-moulded part or a hybrid comprising a metal tube overmoulded with plastic.

6. Bearing sleeve (2) according to one of the preceding claims, **characterised in that** the inner tube (4) has a greater longitudinal extent than the intermediate tube (6) and/or the intermediate tube (6) has a greater longitudinal extent than the outer tube (8).

7. Bearing sleeve (2) according to one of the preceding claims, **characterised in that** the distance in radial direction (R) between the inner core (4) and the intermediate tube (6) is smaller than the distance in radial direction (R) between the intermediate tube (6) and the outer tube (8).

8. Bearing sleeve (2) according to one of the preceding claims, **characterised in that,** within a longitudinal section plane passing through the central longitudinal axis (A), both individual curve paths (18a, 18b) diametrically opposite with respect to the central longitudinal axis are identical or different.

9. Bearing sleeve (2) according to one of the preceding claims, **characterised in that** a constriction point (E) in a longitudinal section plane containing the central longitudinal axis (A) lies on an end face (12b) of the outer elastomeric body (12), and the constriction point (E) lies within an outer circle (30a) with centre (Z), the diameter of which corresponds to the inner diameter of the outer tube (8) in a transverse centre plane (Q) of the bearing sleeve (2) and/or within a centre circle (30b) with centre (Z), the diameter of which corresponds to the mean diameter of the outer elastomeric body (12) in a transverse centre plane (Q) of the bearing sleeve (2).

## Revendications

1. Douille de palier (2) traversée par un axe longitudinal central (A), comprenant un noyau intérieur (4) s'étendant le long de l'axe longitudinal central (A), un tube extérieur (8) disposé circonférentiellement par rapport au noyau intérieur (4), un tube intermédiaire (6), disposé entre le noyau intérieur (4) et le tube extérieur (6), au moins un corps élastomère intérieur (10) disposé entre le noyau intérieur (4) et le tube intermédiaire (6), ainsi qu'au moins un corps élastomère extérieur (12) disposé entre le tube intermédiaire (6) et le tube extérieur (8), le tube intermédiaire (6) présentant, sur sa périphérie extérieure, un renflement (14) dont les tracés en coupe longitudinale (14a, 14b) se situent, de part et d'autre de l'axe longitudinal central (A), dans un plan de coupe longitudinale passant par l'axe longitudinal central (A), chacune sur une trajectoire courbe fermée distincte (18a, 18b), et le noyau intérieur (4) présente, au moins dans sa zone qui coïncide avec le renflement (14) dans la direction radiale (R), une surface périphérique extérieure cylindrique (4a), et à l'intérieur de chaque plan de coupe longitudinale passant par l'axe longitudinal central (A), les faces frontales (10b) du corps élastomère intérieur (10) sont disposées à l'extérieur des trajectoires courbes fermées (18a, 18b), **caractérisé en ce que** l'épaisseur de paroi (6a) du tube intermédiaire (6) diminue dans au moins une zone axiale extérieure en direction d'au moins une face frontale axiale (24) de la douille de palier (2).

2. Douille de palier (2) selon l'une des revendications précédentes, **caractérisée en ce qu'**une longueur de rétrécissement (12a) du corps élastomère extérieur (12) dans la direction longitudinale (L) correspond au maximum à 0,6 fois la longueur de rétrécissement (10a) du corps élastomère intérieur (10) dans la direction longitudinale (L), de préférence au plus 0,5 fois celle-ci, et de manière encore plus préférée au plus 0,4 fois celle-ci, cette relation s'établissant de préférence dans un plan de coupe longitudinale dans lequel se trouve l'axe longitudinal central (A) et dans lequel se trouvent les deux longueurs de rétrécissement (10a, 12a).

3. Douille de palier (2) selon l'une des revendications précédentes, **caractérisée en ce que** le tube intermédiaire (6) présente un renflement (16) sur son pourtour intérieur.

4. Douille de palier (2) selon l'une des revendications précédentes, **caractérisée en ce que** le corps en élastomère intérieur (10) présente une face frontale (10b) au moins partiellement droite en coupe longitudinale et/ou le corps élastomère extérieur (12) présente une face frontale (12b) de forme parabolique en coupe longitudinale, la parabole s'ouvrant en direction de la face frontale (24) de la douille de palier (2).

5. Douille de palier (2) selon l'une des revendications précédentes, **caractérisée en ce que** le tube intermédiaire (6) est une pièce moulée sous pression ou par injection, ou un hybride constitué d'un tube métallique surmoulé de matière plastique.

6. Douille de palier (2) selon l'une des revendications précédentes, **caractérisée en ce que** le tube intérieur (4) présente une plus grande longueur que le tube intermédiaire (6) et/ou le tube intermédiaire (6) présente une plus grande longueur que le tube extérieur (8).

7. Douille de palier (2) selon l'une des revendications précédentes, **caractérisée en ce que** la distance dans la direction radiale (R) entre le noyau intérieur (4) et le tube intermédiaire (6) est inférieure à la distance dans la direction radiale (R) entre le tube intermédiaire (6) et le tube extérieur (8).

8. Douille de palier (2) selon l'une des revendications précédentes, **caractérisée en ce que,** dans un plan de coupe longitudinale passant par l'axe longitudinal central (A), les deux trajectoires courbes fermées (18a, 18b) diamétralement opposées par rapport à l'axe longitudinal central sont identiques ou différentes.

9. Douille de palier (2) selon l'une des revendications précédentes, **caractérisée en ce qu'**un point de rétrécissement (E) dans un plan de coupe longitudinale dans lequel se trouve l'axe longitudinal central (A) est situé sur une face frontale (12b) du corps élastomère extérieur (12), et le point de rétrécissement (E) se trouve à l'intérieur d'un cercle extérieur (30a) de centre (Z), dont le diamètre correspond au diamètre intérieur du tube extérieur (8) dans un plan médian transversal (Q) de la douille de palier (2) et/ou à l'intérieur d'un cercle médian (30b) de centre (Z), dont le diamètre correspond au diamètre moyen du corps élastomère extérieur (12) dans un plan médian transversal (Q) de la douille de palier (2).
